# EUROPEAN PATENT APPLICATION

(11) **EP 0 566 750 A1**
(43) Date of publication of application: **27.10.1993**
(21) Application number: 92923164.5
(22) Date of filing: 05.11.1992
(51) Int. Cl.: B23Q 15/00, B23Q 17/00, B23Q 11/16, G05B 19/403, G05B 19/405

(54) **METHOD OF TRIAL CUTTING**

(30) Priority: 11.11.1991 JP 321488/91
(71) Applicant: FANUC LTD., Minamitsuru-gun, Yamanashi 401-05 (JP)
(72) Inventor: MATSUMURA, Teruyuki Fanuc Dai-3 Vira-karamatsu, Minamitsuru-gun Yamanashi 401-05 (JP); SHINOZAKI, Satoru 1159, Moda, Ibaragi 308 (JP)
(74) Representative: Billington, Lawrence Emlyn
(86) International application number: JP9201432
(87) International publication number: WO9309912

(57) **Abstract**

A method of trial cutting, wherein stopping and restarting of trial cutting work, repeated operations of trial cutting work on a desirable portion and correcting work for a processing program can be easily performed. By providing speed increasing and decreasing keys K3, K4 for continuously changing a main shaft rotation speed R1 and speed increasing and decreasing keys K1, K2 for continuously changing a tool feed speed R2 on CRT, MDI (4) of a numerically controlled machine, whereby a main shaft rotation speed R1 and a tool feed speed R2 can be freely changed regardless of whether or not a main shaft rotation speed R1 and a tool feed speed R2 are specified by a processing program in a RAM 3, and optimal main shaft rotation speed R1 and tool feed speed R2 are determined while the cutting work is performed on the basis of a processing profile given by the processing program in the RAM 3. Since there is no need for determining optimal cutting conditions by changing a main shaft rotation speed and a tool feed speed by correcting the processing program for each processing unlike the prior art, optimal cutting conditions can be easily obtained within a short period of time.

## Description

### TECHNICAL FIELD

The present invention relates to an improvement of a trial cutting method, applied to a numerical control apparatus for controlling a machine tool in accordance with a machining program.

### BACKGROUND ART

A conventionally known numerical control apparatus, in which a machine tool is controlled by a predetermined machining program, is usually provided with several operation switches such as a cycle start switch, a feed hold switch, and a single block switch. In performing trial cutting with such apparatus, a method such that only a specific part of the machining program is executed using these operation switches. As is well known, the cycle start switch is for starting the previously prepared machining program from the beginning. The feed hold switch is for forcibly stopping the ongoing machining program. The single block switch is for automatically interrupting the ongoing machining program after executing each block of the machining program.

It is usual that various cutting conditions, e.g. a spindle rotational speed and a tool feed speed, being set by the machining program, are not always appropriate. A trial cutting operation is required for adjusting these cutting conditions. The cycle start switch, the feed hold switch, the single block switch and others are manipulated to make a specific part of the machining program run little by little, while observing a cutting surface of a workpiece and a condition of a cutting tool. However, in such a conventional numerical control apparatus, manipulation of switches tends to be complicated in starting or stopping the operation. Because, individual operation switches, i.e. the cycle start switch for making the machining program run, the single block switch, and the feed hold switch for stopping the machining program are normally provided independent of each other. Accordingly, it was difficult to immediately stop the trial cutting operation when an emergency such as a bite or a damage to a cutting tool has occurred.

Furthermore, in a case where the signal block switch is used in the trial cutting operation, the execution order of each machining block of the machining program is strictly regulated. There is, therefore, no flexibility for allowing the return to the block, which has already been executed, to repeat the trial cutting operation again. Moreover, in a case where the feed hold switch is used to stop the machining program, switching operation to resume the trial cutting operation also tends to be very complicated, because it requires to reset the ongoing program and to newly search the beginning of the sequence number corresponding to the designated machining block.

Yet further it may be required, in some occasions in the trial cutting operation, to revise the machining program and restart the trial cutting operation based on the revised machining program. The conventional numerical control apparatus, however, needs to interrupt the trial cutting operation and reset the machining program before executing the correction of the machining program. Furthermore, in order to restart the trial cutting operation, a search of the beginning of the corresponding sequence number must be made to read out the revised part of the machining program. Therefore, correction of the machining program and restart control for the trial cutting operation became complicate.

The conventional numerical control apparatus is normally given, by the machining program, all the data required in the trial cutting operation, i.e. cutting conditions such as a spindle rotational speed and a tool feeding speed and machining configuration of a workpiece to be cut. Accordingly no other cutting conditions than those having been set in advance in the machining program, could be used in the trial cutting operation. This results in an enlarged and elongated adjustment for obtaining optimum cutting conditions. Thus, the complicated optimization procedure, required for revising the program and restarting the trial cutting operation as described previously, must be executed repeatedly so many times that time required for this optimization will never be shortened.

### DISCLOSURE OF INVENTION

The present invention provides a novel trial cutting method which enables an operator not only to easily execute various operations such as stopping and/or restarting of the trial cutting operation, repeating the trial cutting operation for a desired part of the program, and revising the machining program, but to obtain optimum cutting conditions.

A first aspect of the present invention provides a trial cutting method, applied to a numerical control apparatus for controlling a machine tool in accordance with a machining program, comprising a step of executing the trial cutting operation in accordance with the machining program only while a forward switch, provided in the numerical control apparatus, is turned on, and the trial cutting operation is stopped when the forward switch is turned off. Thus, the first aspect of the present invention makes it easy to control the stopping and/or restarting of the trial cutting operation.

Furthermore, a second aspect of the present invention provides a trial cutting method, applied to a numerical control apparatus for controlling a machine tool in accordance with a machining program, comprising a step of shifting the cutting tool in a reverse direction opposite to the machining program during the trial cutting operation only while a reverse switch, provided in the numerical control apparatus, is turned on, and, the reverse shifting movement of the cutting tool is stopped when the reverse switch is turned off. Therefore, the second aspect of the present invention makes it possible to repeat the trial cutting operation for a desired part of the machining program.

Still further, a third aspect of the present invention provides a trial cutting method, applied to a numerical control apparatus for controlling a machine tool in accordance with a machining program, comprising a step of revising the machining program during the trial cutting operation when an edit switch, provided in the numerical control apparatus, is turned on. With this function, the ongoing trial cutting operation need not be interrupted or reset for the correction of the machining program, and also operation for reading out a head position of the sequence number is no longer necessary. The trial cutting operation can be repeatedly executed on the basis of the revised machining program by manipulating the forward and/or reverse switches after finishing the correction of the machining program.

Moreover, a fourth aspect of the present invention provides a trial cutting method, applied to a numerical control apparatus for controlling a machine tool in accordance with a machining program, comprising a step for continuously varying a cutting condition regardless of the given cutting condition in the machining program when a cutting condition selecting switch, which is provided in the numerical control apparatus, is turned on. The numerical control apparatus executes a trial cutting operation in accordance with a cutting condition selected by the cutting condition selecting switch and a workpiece configuration specified by the machining program. Accordingly, the fourth aspect of the present invention allows the operator to freely change the cutting condition of the trial cutting operation irrespective of the cutting condition given by the machining program. The correction of the machining program, which used to be necessary for the modification of the cutting condition, will no longer be required. Therefore, the optimization of the cutting condition can easily be attained.

Yet further, a fifth aspect of the present invention provides a trial cutting method, applied to a numerical control apparatus for controlling a machine tool in accordance with a machining program, comprising a step of writing a presently selected cutting condition into the machining program when a cutting condition setting switch, provided in the numerical control apparatus, is turned on.

Furthermore, a sixth aspect of the present invention provides a trial cutting method, applied to a numerical control apparatus for controlling a machine tool in accordance with a machining program, comprising a step of visually displaying the cutting condition presently selected by the cutting condition selecting switch. Hence, the optimum cutting condition can be inputted manually in the machining program.

### BRIEF DESCRIPTION OF DRAWINGS

Fig. 1 is a block diagram showing essential components of the numerical control apparatus embodying the method of the present invention;
Fig. 2 is a flowchart schematically illustrating the system program for the trial cutting operation executed by the numerical control apparatus in accordance with the present invention;
Fig. 3 is a flowchart showing a continued part of the above system program shown in Fig. 2;
Fig. 4 is a flowchart showing a continued part of the above system program shown in Fig. 3;
Fig. 5 is a flowchart showing a continued part of the above system program shown in Fig. 4;
Fig. 6 is a view showing one example of the monitor image used in the numerical control apparatus in accordance with the present invention; and
Fig. 7 is a schematic view illustrating both the forward and reverse movements of the cutting tool in the trial cutting operation in accordance with the present invention.

### BEST MODE FOR CARRYING OUT THE INVENTION

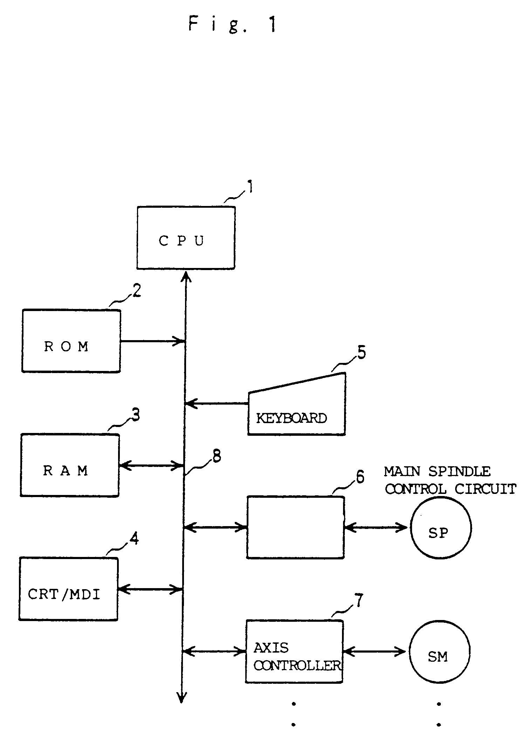

Hereinafter, an embodiment of the present invention will e described with reference to the accompanied drawings. In Fig. 1, a reference numeral 2 represents a ROM storing control programs of the numerical control apparatus. A reference numeral 3 represents a non-volatile RAM, which is used for preserving and temporary memorizing various data and machining programs. A reference numeral 4 represents a manual data input device equipped with various soft keys and a display unit (CRT/MDI). A reference numeral 5 represents a keyboard serving as a data input means, and a reference numeral 6 represents a main spindle control circuit, which drives and control a main spindle motor SP of a machine tool (an NC lathe in this embodiment) in response to input signals of the soft keys. A reference numeral 7 represents an axis controller which drives and controls several servo-motors SM by shifting the machine tool along respective axes thereof in response to commands from a CPU 1, in accordance with a machining configuration specified by the machining program stored in the non-volatile RAM 3 or input data given by the soft keys. Above components are respectively connected with the CPU 1 via bus 8. The ROM 3 also stores numerous system programs for realizing various functions of the numerical control apparatus. When the numerical control apparatus is turned on, the CRT/MDI 4 displays an initial image plane including a guidance. This enables an operator to select a desirable system program by manipulating the soft key with reference to the displayed guidance. Upon this selection, the numerical control apparatus runs the selected system program.

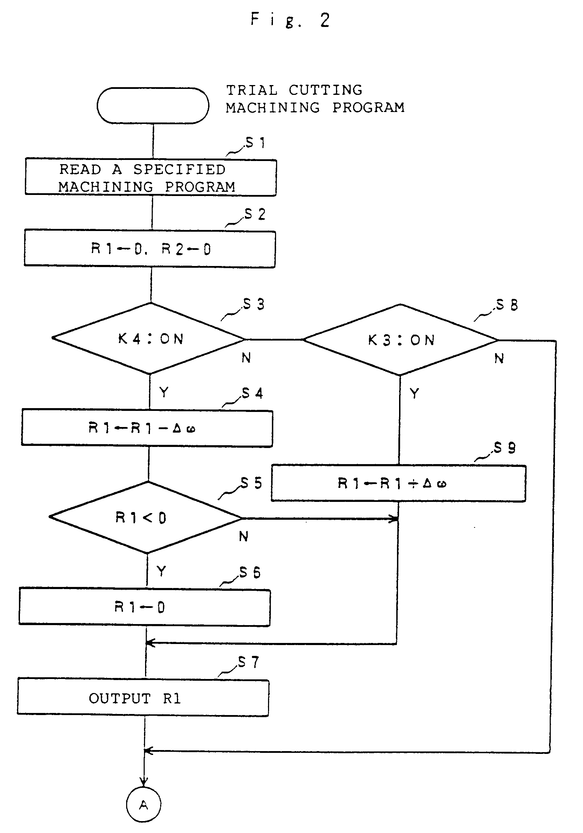

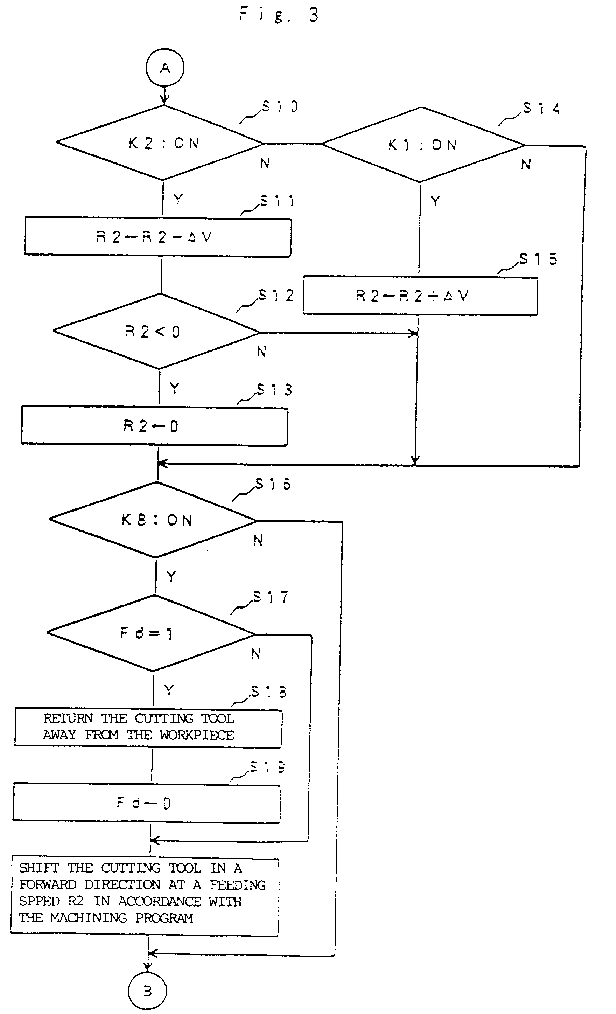

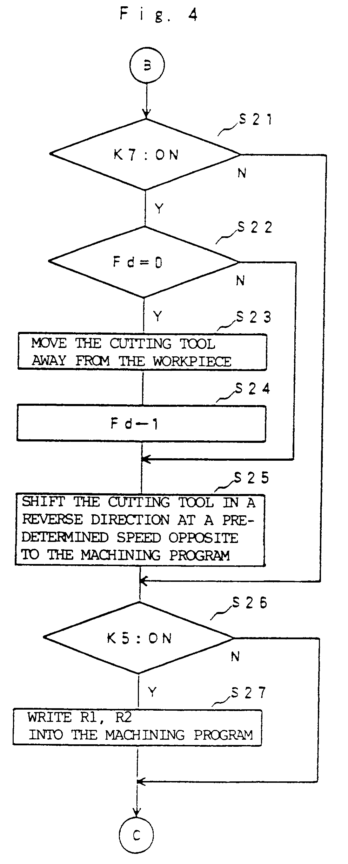

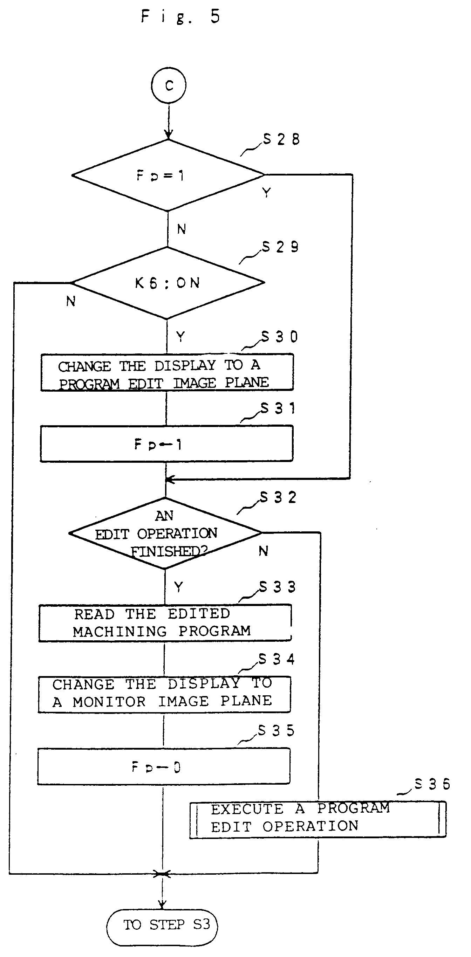

Figs. 2-5 are flowcharts schematically illustrating the system programs to be executed when an item of "trial cutting operation" is selected among the function items displayed on the initial image plane. Hereinafter, the trial cutting operation of this embodiment will be explained with reference to these flowcharts.

In step S1, the CPU 1, which has just started the procedure for the trial cutting operation after having finished above detection of the selected item, reads out from the RAM 3 the machining program specified by an operator through the keyboard 5. Based on the read-out data, such as workpiece configuration data and cutting tool data, being set in this machining program, the CPU 1 causes the CRT/MDI 4 to display on its display unit a monitor image plane for the trial cutting operation. The CPU 1 further defines the assignment of functions of respective soft keys. Then, in step S2, the CPU 1 initializes both a spindle rotational speed register R1 and a tool feeding speed register R2 to "0".

In general, the cutting condition relating to lathe turning operation is roughly classified into those of spindle rotational speed, tool feeding speed, and depth of cut. Among these cutting conditions, the cutting data relating to the depth of cut is directly given from the machining program in this embodiment.

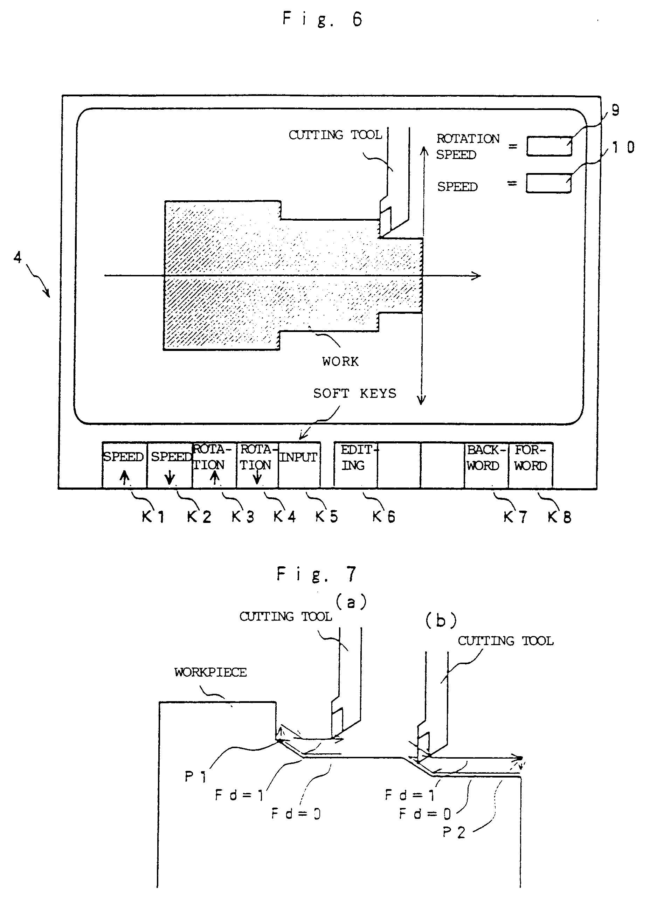

Fig. 6 is a view showing one example of a monitor image plane displayed on the CRT/MDI 4 at this stage. Besides a workpiece configuration and a cutting tool configuration, the monitor image plane displays the cutting conditions. The display regions for these cutting conditions are provided as a spindle rotational speed display region 9 and a tool feeding speed display region 10 on the monitor image plane. Disposed at the bottom of the CRT/MDI 4 are soft keys assigned to various functions. Soft keys of Fig. 6 include a tool feeding speed acceleration key K1 for continuously increasing the tool feeding speed, a tool feeding speed deceleration key K2 for continuously decreasing the tool feeding speed, a spindle rotational speed acceleration key K3 for continuously increasing the spindle rotational speed, and a spindle rotational speed deceleration key K4 for continuously decreasing the spindle rotational speed. These acceleration and deceleration keys K1-K4 serve as cutting condition selecting switches. Also composing these soft keys are an input key K5 for writing the cutting conditions selected by the acceleration and/or deceleration keys K1-K4 into the machining program, an edit key K6 for selecting a program edit function while the trial cutting operation is going on, a reverse key K7 serving as a reverse switch, and a forward key K8 serving as a forward switch. The spindle rotational speed display region 9 and the tool feeding speed display region 10 are capable of making the real-time display of data memorized in the spindle rotational speed register R1 and the tool feeding speed register R2, respectively. The values to be displayed in the display regions 9 and 10 are "0" at this stage. By the way, all the soft keys K1-K8 are automatic-resetting push-type switches, each being designed to be turned on to close only while it is depressed by an operator.

After displaying the monitor image plane for the trial cutting operation on the CRT/MDI 4, the CPU 1 makes judgements in a detecting loop consisting of a plurality of judging steps S3, S8, S10, S14, S16, S21, S26, S28 and S29 as to whether or not any one of the soft keys K1-K8 is depressed by an operator, and also as to whether or not an edit image plane selecting flag Fp is set. If the operator has not depressed any soft key, the edit image plane selecting flag Fp is not set yet at this stage. Thus, all the judgements in above judging steps become FALSE in NO in this detecting loop unless the operator depresses any one of soft keys. From this stage on, the CPU 1 repeatedly executes above detecting loop until the operator depresses any one of soft keys.

In the trial cutting operation, the operator first depresses the spindle rotational speed acceleration key K3 to give a command for continuously increasing the spindle rotational speed until it reaches the condition wherein a lathe turning operation becomes feasible. This depression of the spindle rotational speed acceleration key K3 is detected by the CPU 1 in the judging step S8 in the detecting loop. In response to the depression of the spindle rotational speed acceleration key K3, the CPU 1 continues in step S9 to increment the value of the spindle rotational speed resister R1 by a predetermined value Δω in every running cycle of the detecting loop as long as the spindle rotational speed acceleration key K3 is continuously depressed. Thus, the value of the spindle rotational speed register R1 is continuously increased. Then, the CPU 1 proceeds to step S7 to feed the value stored in the register R1 to the main spindle control circuit 6 as a target spindle rotational speed, thereby continuously increasing rotational speed of the main spindle motor SP until it is equalized with this target value. The value stored in the spindle rotational speed register R1 is fed to the CRT/MDI 4 to rewrite the value displayed in the spindle rotational speed display region 9 so as to let the operator know the spindle rotational speed selected in the present stage.

If the main spindle motor SP has once reached a proper rotational speed, the operator releases his/her hand from the spindle rotational speed acceleration key K3. The value of the spindle rotational speed register R1, i.e. the rotational speed of the main spindle motor SP, is held as it is upon the release of the spindle rotational speed acceleration key K3. Then, the CPU 1 starts approach control of the cutting tool.

The operator, then, depresses the tool feeding speed acceleration key K1 to continuously increase the tool feeding speed, and this will be by the CPU 1 in the judging step S14 of the detecting loop. In response to the depression of the tool feeding speed acceleration key K1 by an operator, the CPU 1 continues in step S15 to increment the value of the tool feeding speed resister R2 by a predetermined value ΔV in every running cycle of the detecting loop as long as the tool feeding speed acceleration key K1 is continuously depressed. Thus, the value of the tool feeding speed register R2 is continuously increased, and, the value stored in this register R2 is fed to the CRT/MDI 4 to renew the value displayed in the tool feeding speed display region 10 so as to let the operator know the tool feeding speed selected in the present stage.

In this stage, the cutting tool is still kept in a stopped condition, since the machining program in the RAM 3, for causing the servo-motors SM to feed the cutting tool along respective axes has not been started yet. While confirming the value of the tool feeding speed register R2 through the data displayed in the tool feeding speed display region 10, the operator continues to depress the tool feeding speed acceleration key K1 until an adequate tool feeding speed is displayed. Then, the operator releases his/her hand from the tool feeding speed acceleration key K1. The tool feeding speed selected at this stage is directly stored in the register R2.

After selecting an appropriate tool feeding speed, the operator next depresses the forward key K8. Then, the CPU 1 detects this depression of the forward key K8 in the judging step S16 of the detecting loop. Subsequently, the CPU 1 makes a judgement in step S17 as to whether or not a condition memory flag Fd is set. The condition memory flag Fd stores the direction along which the cutting tool was shifting before the forward key K8 or the reverse key K7 had been depressed. If this flag Fd is not set (i.e. Fd=0), it means that the cutting tool was fed in a forward direction in accordance with the machining program in the RAM 3. On the contrary, if the condition memory flag Fd is set (i.e. Fd=1), it means that the cutting tool was fed in a reverse direction opposite to that of the machining program. At this stage, i.e. at the time when the forward key K8 is depressed for the first time, the condition memory flag Fd still maintains an initialized condition; therefore, the result of the judgement will be FALSE in the step S17. Hence, the CPU 1 repeatedly executes a step S20 at every running cycle of the detecting loop until the judgement of the forward key K8 in the step S16 turns to OFF. In the step S20, the CPU 1 obtains the tool shifting locus by taking account of the machining configuration and depth of cut of the cutting tool specified by the machining program stored in the RAM 3, and the CPU 1 shifts the cutting tool on the basis of a present value of the tool feeding speed stored in the tool feeding speed register R2. The present position of the cutting tool and/or change cutting condition of the workpiece are displayed one by one on a monitor image plane of the CRT/MDI 4 just like a conventional apparatus.

The approach control of the cutting tool will come to an end when a tip end of the cutting tool is brought into contact with the workpiece. Then, the lathe turning operation will soon be initiated. During lathe turning operation, observing an actual cutting condition, if the operator concludes that the spindle rotational speed and/or the tool feeding speed are not adequate, the operator can manipulate the acceleration and/or deceleration keys K1-K4 to optimize the cutting conditions by continuously varying the cutting conditions, i.e. the spindle rotational speed and the tool feeding speed. Operations for increasing the spindle rotational speed and the tool feeding speed by use of the spindle rotational speed acceleration key K3 and the tool feeding speed acceleration key K1 have already been already explained and will no more be explained.

When reducing the spindle rotational speed, the operator depresses the spindle rotational speed deceleration key K4 designed for continuously decreasing the spindle rotational speed. This depression of the spindle rotational speed deceleration key K4 is detected by the CPU 1 in the step S3 in the detecting loop. In response to the depression of the spindle rotational speed deceleration key K4, the CPU 1 continues in step S4 to decrement the value of the spindle rotational speed resister R1 by a predetermined value Δω in every running cycle of the detecting loop as long as the spindle rotational speed deceleration key K4 is continuously depressed. Thus, the value of the spindle rotational speed register R1 is continuously decreased.

If the value of the spindle rotational speed register R1 is found to have been decreased to less than "0" in a step S5, however, the CPU 1 sets the register R1 to "0" in step S6. Thereafter, the value stored in this register R1 is fed to the main spindle control circuit 6 as a target spindle rotational speed so that the rotational speed of the main spindle motor SP is continuously decreased until it is equalized with this target value. The value stored in the spindle rotational speed register R1 is also fed to the CRT/MDI 4 to renew the value displayed in the spindle rotational speed display region 9 so as to let the operator know the present spindle rotational speed (Step S7).

Furthermore when reducing the tool feeding speed, the operator depresses the tool feeding speed deceleration key K2 to continuously decrease the tool feeding speed. This depression of the tool feeding speed decelerator key K2 is detected by the CPU 1 in the judging step S10 of the detecting loop. In response to the depression of the tool feeding speed deceleration key K2, the CPU 1 continues to decrement the value of the tool feeding speed resister R2 by a predetermined value ΔV in every running cycle of the detecting loop as long as the tool feeding speed deceleration key K2 is continuously depressed. Thus, the value of the tool feeding speed register R2 is continuously decreased (Step S11). If the value of the tool feeding speed register R2 is found to have been decreased to less than "0" in step S12, however, the CPU 1 sets the register R2 to "0" in a step S13. The step S20 for feeding the cutting tool is processed by taking account of the tool shifting locus obtained from the machining program stored in the RAM 3 and the present value of the tool feeding speed stored in the tool feeding speed register R2; therefore, the feeding speed of the cutting tool is automatically increased/decreased in accordance with increase/decrease of the value stored in the register R2.

The depression of the tool feeding speed acceleration/deceleration keys K1 and K2, the spindle rotational speed acceleration/deceleration keys K3 and K4, and the forward key K8 are detected independently in the detection loop. Therefore, it is possible to increase/decrease the spindle rotational speed and/or tool feeding speed even while the feeding operation of the cutting tool is in progress. It is also possible to vary the spindle rotational speed and/or tool feeding speed after the feed of the cutting tool is completely stopped. Furthermore, it is possible to newly set the tool feeding speed for the next feeding operation of the feeding of the cutting tool. Still further, a serious malfunction may arise as a result of the approach control of the cutting tool. For example, a significant amount of bite or damage of the cutting tool may be caused at the moment when the tip end of the cutting tool is brought into contact with the workpiece. In such a case, the process of the step S20 can be skipped and the feeding operation of the cutting tool can immediately be stopped by releasing the forward key K8.

When the operator has judged that the cutting conditions, i.e. the spindle rotational speed and/or the tool feeding speed have been optimized by the manipulation of the acceleration/deceleration keys K1-K4, the operator depresses the input key K5. The CPU 1 detects the depression of the input key K5 in the judging step S26 of the detecting loop. The CPU 1 writes the presently selected spindle rotational speed and the tool feeding speed, i.e. the latest values of the spindle rotational speed register R1 and the tool feeding speed register R2, into the RAM 3 as optimum cutting conditions suitable for the corresponding machining block in the machining program (Step S27).

If the operator judges that the machining configuration, defined by the machining program stored beforehand in the RAM 3, is adequate, he/she manipulates the forward key K8 to run the machining program. Then, the operator optimizes the spindle rotational speed and the tool feeding speed by manipulating the acceleration/deceleration keys K1-K4 in each machining block, e.g. a machining block for cutting an edge surface and a machining block for cutting the peripheral surfaces in various sizes. The operator depresses the input key K5 successively upon acquisition of optimum values. In response to the depression of the input key K5, the selected cutting conditions are written into the RAM 3 as optimum cutting conditions suitable for the corresponding machining block.

The deficiency of the currently using machining program may be found through the observation of actual lathe turning operation. If the machining program misses some programs relating to, for example, C-surface (chamfering) or R (rounding), the operator can depress the edit key K6 to temporarily interrupt the trial cutting operation and revise the machine program stored in the RAM 3. After detecting the depression of the edit key K6 in the judging step S29 of the detecting loop, the CPU 1 causes the CRT/MDI 4 to change the display screen from the monitor image plane to a program edit image screen similar to that of the conventional apparatus. Then, the CPU 1 sets the edit image plane selecting flag Fp to "1" (Steps S30 and S31). Then, the CPU 1 judges whether or not an edit finish key of the keyboard 5 is depressed (Step S32).

If the edit finish key has not been depressed yet, the CPU 1 executes the editing or revising processing for the corresponding machining program in the same manner as the conventional apparatus. In this case, numerous soft keys of the CRT/MDI 4 are newly assigned in accordance with the selected edit image plane. Therefore, the operator can manipulate these newly assigned soft keys or character/numeric keys provided on the keyboard 5 to program. Then, the CPU 1 memorizes thus renewed machine program into the RAM 3 (Step S36). The edit image plane selecting flag Fp is set upon the depression of the edit key K6. Then, the CPU 1 repeatedly executes, in predetermined cycles until the depression of the edit finish key of the keyboard 5 is detected, the procedure consisting of the judging processes in the detecting loop not including the step S29, the judging process of the step S32, and the process of the step S32 relating to the edit or modification of the machining program.

After finishing the correction of the machining program, the operator depresses the edit finish key of the keyboard 5. The CPU 1 detects this depression of the edit finish key in the judging process of the step S32. Then, the CPU 1 newly reads the revised machining program from the RAM 3 and obtains the tool shift locus in accordance with the workpiece configuration and the depth of cut of the cutting tool defined by the revised machining program (Step S33). Thereafter, the CPU 1 causes the CRT/MDI 4 to change the display screen again to the monitor image plane for the trial cutting operation. At the same time, assignments to various soft keys are put back to the original assignments shown in Fig. 6 (Step S34). Thereafter, the CPU 1 resets the edit image plane selecting flag Fp to "0" (Step S35).

At this moment, if the corrected portion of the machining program is the portion, which has already been executed for the trial cutting operation, the cutting tool must be returned to this corrected portion to execute the trial cutting operation again based on the corrected machining program. The operator thus depresses the reverse key K7. The CPU 1 detects this depression of the reverse key K7 in the judging process of the step S21 of the detection loop. Thereafter, the CPU 1 judges whether or not the condition memory flag Fd is set (Step S22). If the condition memory flag Fd is not set, it means that the cutting tool has been shifting in a forward direction in accordance with the machining program, while being brought into contact with the workpiece (For example, the condition of Fd=0 in cutting tool position (a) of Fig. 7). Or, it means that the cutting tool was stopped, while being brought into contact with the workpiece (For example, the position of P1 in cutting tool position (a) of Fig. 7). Therefore, it is feared that the workpiece or the cutting tool may be damaged if the cutting tool is moved in an opposite direction while they are kept in contact with each other. Therefore, if the condition memory flag Fd is not set, the CPU 1 moves the cutting tool by a predetermined distance away from the workpiece in a radially outward direction in a step S23. By moving the cutting tool in this manner, some clearance will be provided between the cutting tool and the workpiece. Subsequently, in step S24, the CPU 1 sets the condition memory flag Fd to "1" to memorize the cutting tool's reverse shift movement. Thereafter, in step S25, the CPU 1 runs the machining program in a reverse manner so that the cutting tool can be shifted in a reverse direction at a predetermined feeding speed (For example, the condition of Fd=1 in cutting tool position (a) of Fig. 7). As a result of the condition memory flag Fd being set to "1", the process of the step S25 is repeatedly executed in every running cycle of the detecting loop as long as the judgement in the step S21 is kept YES in response to the depression of the reverse key K7. Thus, the reverse shifting operation of the cutting tool is continuously carried out. If the reverse key K7 is released, the processing of the step S25 is no larger executed, and, therefore, the reverse shifting operation of the cutting tool is immediately terminated. When the reverse key K7 is depressed again to resume the reverse shifting after an interruption of the reverse shifting operation, processings for providing clearance, defined by the steps S23 and S24, will no longer be carried out, because the condition memory flag Fd has already been set. That is, no moving-away operation of the cutting tool will be carried out again.

After returning the tool to the position from which the trial cutting operation should be restarted (for example, the position P2 in tool position (b) of Fig. 7), the operator depresses the forward key K8. Then, the CPU 1 detects this depression of the forward key K8 in the judging step S16 of the detecting loop. Subsequently, the CPU 1 judges in step S17 whether or not the condition memory flag Fd is set. In the case where the trial cutting operation to be executed is one to be repeated for the portion for which the trial cutting has once been executed, the reverse shifting movement of the cutting tool should have inevitably been carried out. Therefore, the condition memory flag Fd is supposed to have been set. Accordingly, the CPU 1 moves the cutting tool in radially inward direction by the same amount as that of the moving-away in the beginning of the reverse shift operation of the cutting tool, in order to let the cutting tool approach the workpiece (Step S18). Thereafter, the CPU 1 resets the condition memory flag Fd to memorize the cutting tool's forward movement (Step S19). Then, from the specific position of the machining program, having been read at the time when the reverse shift operation has been finished, the CPU 1 restarts the machining program in a forward direction. That is, the CPU 1 repeatedly executes the step S20 in every running cycle of the detecting loop until the judgement of the forward key K8 becomes OFF. In this step, the CPU 1 operates according to the tool shifting locus determined base on the machining configuration and depth of cut of the cutting tool specified by the renewed machining program. Then, the CPU 1 shifts the cutting tool for the trial cutting operation on the basis of a present value of the tool feeding speed memorized in the tool feeding speed register R2 (For example, the condition of Fd=0 in cutting tool position (b) of Fig. 7).

In a case where the trial cutting operation has to be executed again, after correcting the portion of the machining program which has once been executed for the trial cutting operation, it will be preferable to correct the machining program after returning the cutting tool, in accordance with the non-revised machining program, to the starting position of the machining block corresponding to the portion to be revised, because the cutting tool may interfere with the workpiece in the reverse shifting operation if the machining program is extensively modified. Furthermore, by doing so, the cutting tool can be kept away from the workpiece while the machining program correction is in progress.

The procedure for optimizing the cutting conditions by use of the acceleration/deceleration keys K1-K4 and the input key K5 is the same as in the previous example even in the case where the trial cutting operation is to be carried out in accordance with the revised machining program.

As described above, according to the trial cutting method of the present invention, the trial cutting operation can be carried out in accordance with the machining program of the RAM 3, and based on the spindle rotational speed and the tool feeding speed respectively selected by the cutting condition selecting switches, namely, the spindle rotational speed acceleration/deceleration keys K3 and K4 and the tool feeding speed acceleration/deceleration keys K1 and K2. Thus, the operator can execute the trial cutting operation regardless of whether or not the cutting conditions have been defined. Furthermore, the cutting conditions can continuously be changed and freely selected by manipulating the acceleration/deceleration keys K1-K4. Hence, optimum cutting conditions can easily be obtained on the basis of the material and the diameter of the workpiece without revising the program for changing the cutting conditions.

Moreover, the machining program can be corrected while the trial cutting operation is going on. Furthermore, the soft key K7, as a reverse switch, and the soft key K8, as a forward switch, enable the operator to shift the cutting tool to any position within a range specified by the machining program so that the trial cutting operation can be repeated for the desired portion. Hence, even when the machining program has been corrected during the trial cutting operation, the operator can execute the trial cutting operation once more for the same portion in accordance with the renewed machining program. This largely simplifies the procedure required for the correction of the program or the preparation for the trial cutting operation. Furthermore, the feed of the cutting tool can easily and immediately be stopped by releasing the soft keys K7 and K8. Therefore, even when the machining program contains some problem, damage to the cutting tool caused by, for example, the collision can be prevented.

Although, in the present embodiment, the spindle rotational speed and the tool feeding speed are changeable for the trial cutting operation, it will also be possible to provide a cutting condition selecting switch capable of continuously increasing/decreasing the depth of cut by the cutting tool.

The trial cutting method in accordance with the present invention can easily be applied not only to the NC lathe disclosed in the above embodiment but to any other NC machine tools such as an NC milling machine and an NC grinder in accordance with their machining methods.

The trial cutting method of the present invention enables the cutting tool to be fed in accordance with the machining program only while the forward and reverse switches provided in the numerical control apparatus are turned on. Thus, it is easy to immediately stop the feeding movement of the cutting tool. Even when the machining program contains some problem, the cutting tool or workpiece can be prevented from being damaged. Furthermore, the trial cutting method of the present invention allows the operator to revise the machining program while the trial cutting operation is going on. Thus, the operator can feed the cutting tool to any position by manipulating the forward and/or reverse switches so that the trial cutting operation can be repeated on the basis of the renewed machining program. This greatly simplifies the procedure required for the correction of the program or the preparation for the trial cutting operation.

Still further, the present invention provides the numerical control apparatus with the cutting condition selecting switch capable of continuously varying the cutting conditions. This enables the operator to freely adjust the spindle rotational speed and/or the tool feeding speed in the trial cutting operation regardless of whether or not the cutting conditions are specified by the machining program. Thus, unlike the conventional method, in the case of the method according to the present invention, the machining program need not be modified for each change of cutting conditions, so that the cutting conditions best suiting the condition of the workpiece such as the kind of material can easily be determined in a short period of time. Furthermore, the cutting condition setting switch allows the optimum cutting conditions to be written automatically into the machining program, to refer to the cutting conditions displayed on the display unit, and to manually input these optimized cutting conditions into the machining program.

## Claims

1. A trial cutting method, applied to a numerical control apparatus for controlling a machine tool in accordance with a machining program, comprising the steps of:
providing a forward switch in the numerical control apparatus; and
executing the trial cutting operation in accordance with the machining program only while said forward switch is turned on.

2. A trial cutting method in accordance with claim 1, further comprising the steps of:
providing a cutting condition selecting switch in the numerical control apparatus for continuously varying cutting conditions; and
executing the trial cutting operation in accordance with a cutting condition selected by said cutting condition selecting switch and also in accordance with a machining configuration specified by the machining program.

3. A trial cutting method in accordance with claim 2, wherein said cutting condition selecting switch comprises spindle rotational speed acceleration/deceleration keys for continuously increasing/decreasing a spindle rotational speed and tool feeding speed acceleration/deceleration keys for continuously increasing/decreasing a tool feeding speed.

4. A trial cutting method in accordance with claim 2, further comprising the steps of:
providing a cutting condition setting switch in the numerical control apparatus; and
writing presently selected cutting conditions into the machining program when said cutting condition setting switch is turned on.

5. A trial cutting method in accordance with claim 1, further comprising the steps of:
providing an edit switch in the numerical control apparatus; and
inputting data necessary for correcting the machining program during the trial cutting operation when said edit switch is turned on.

6. A trial cutting method, applied to a numerical control apparatus for controlling a machine tool in accordance with a machining program, comprising the steps of:
providing a forward switch and a reverse switch in the numerical control apparatus; and
executing the trial cutting operation in accordance with the machining program only while said forward switch is turned on; and
shifting the cutting tool in a reverse direction opposite to the machining program during the trial cutting operation only while said reverse switch is turned on.

7. A trial cutting method in accordance with claim 6, further comprising the steps of:
providing a cutting condition selecting switch in the numerical control apparatus for continuously varying cutting conditions; and
executing the trial cutting operation in accordance with a cutting operation in accordance with a cutting condition selected by said cutting condition selecting switch and also in accordance with a machining configuration specified by the machining program.

8. A trial cutting method in accordance with claim 7, wherein said cutting condition selecting switch comprises spindle rotational speed acceleration/deceleration keys for continuously increasing/decreasing a spindle rotational speed and tool feeding speed acceleration/deceleration keys for continuously increasing/decreasing a tool feeding speed.

9. A trial cutting method in accordance with claim 7, further comprising the steps of:
providing a cutting condition setting switch in the numerical control apparatus; and
writing presently selected cutting conditions into the machining program when said cutting condition setting switch is turned on.

10. A trial cutting method in accordance with claim 6, further comprising the steps of:
providing an edit switch in the numerical control apparatus; and
inputting data necessary for correcting the machining program during the trial cutting operation when said edit switch is turned on.

11. A trial cutting method in accordance with claim 6, wherein said cutting tool is moved away from a workpiece in a radially outward direction by a predetermined amount so as to maintain a clearance between the cutting tool and the workpiece before the machining program is run reversely.

12. A trial cutting method, applied to a numerical control apparatus for controlling a machine tool in accordance with a machining program, comprising the steps of:
providing a cutting condition selecting switch in the numerical control apparatus for continuously varying cutting conditions; and
executing the trial cutting operation in accordance with a cutting condition selected by said cutting condition selecting switch and also in accordance with a machining configuration specified by the machining program.

13. A trial cutting method in accordance with claim 12, wherein said cutting condition selecting switch comprises spindle rotational speed acceleration/deceleration keys for continuously increasing/decreasing a spindle rotational speed and tool feeding speed acceleration/deceleration keys for continuously increasing/decreasing a tool feeding speed.

14. A trial cutting method in accordance with claim 12, further comprising the steps of:
providing a cutting condition setting switch in the numerical control apparatus; and
writing presently selected cutting conditions into the machining program when said cutting condition setting switch is turned on.

15. A trial cutting method in accordance with any one of claims 1 to 14, further comprising a step of visually displaying cutting conditions selected by the machining program or the cutting condition selecting switch.
